# EUROPEAN PATENT APPLICATION

(11) **EP 3 757 537 A1**
(43) Date of publication of application: **30.12.2020**
(21) Application number: 18906805.9
(22) Date of filing: 10.12.2018
(51) Int. Cl.: G01L 3/14, G01L 3/10

(54) **TORQUE SENSOR**

(30) Priority: 21.02.2018 JP 2018029140
(71) Applicant: Alps Alpine Co., Ltd., Ota-ku Tokyo 145-8501 (JP)
(72) Inventor: YOKOYAMA, Kimihiro, Tokyo 145-8501 (JP)
(74) Representative: Maiwald Patent- und Rechtsanwaltsgesellschaft mbH
(86) International application number: PCT/JP2018/045259
(87) International publication number: WO 2019/163258

(57) **Abstract**

A torque sensor according to an embodiment of the present invention includes: a strain generation unit with an outer ring-shaped unit, an inner ring-shaped unit that shares a center with the outer ring-shaped unit; and a plurality of spoke units connecting the outer ring-shaped unit with the inner ring-shaped unit; an insulation layer provided on the strain generation body; a first resistor unit and a second resistor unit that are connected in series and that are provided on the insulation layer; and a first output terminal that is connected between the first resistor unit and the second resistor unit, wherein the first resistor unit includes a plurality of first gauge elements connected in series and are arranged in each of the plurality of the spoke units, and the second resistor unit includes a plurality of second gauge elements connected in series and are arranged in each of the plurality of the spoke units.

## Description

### TECHNICAL FIELD

The present invention relates to a torque sensor.

### BACKGROUND ART

In recent years, a torque sensor with a disk-shaped strain generation body and strain gauges (gages) (strain sensors, distortion gauges, or, distortion sensors) is used in a joint part of a robot. In this type of a torque sensor, the strain generation body is arranged perpendicular to a rotation axis, a strain of the strain generation body according to a torque is detected by the strain gauges, and the torque applied to the strain generation body is detected.

### PRIOR ART DOCUMENTS

### [Patent Document]

[Patent Document 1] Japanese Unexamined Patent Application Publication No. 2013-96735

### SUMMARY OF THE INVENTION

### [TECHNICAL PROBLEM]

In a conventional torque sensor, however, there is a problem in that, in a case where a load is applied to the strain generation body from a direction different from a rotational direction, a strain of the strain generation body due to a load is detected by the strain gauges and an error is generated in a detected torque.

The present invention has been made in view of the above problem, and an object of the present invention is to provide a torque sensor that is capable of accurately detecting a torque.

### [SOLUTION TO PROBLEM]

A torque sensor according to an embodiment of the present invention includes: a strain generation unit with an outer ring-shaped unit, an inner ring-shaped unit configured to share a center with the outer ring-shaped unit, and a plurality of spoke units connecting the outer ring-shaped unit with the inner ring-shaped unit; an insulation layer provided on the strain generation body, a first resistor unit and a second resistor unit that are connected in series and that are provided on the insulation layer; and a first output terminal that is connected between the first resistor unit and the second resistor unit, wherein the first resistor unit includes a plurality of first gauge elements connected in series and are arranged in each of the plurality of the spoke units, and the second resistor unit includes a plurality of second gauge elements connected in series and are arranged in each of the plurality of the spoke units.

### [ADVANTAGEOUS EFFECTS OF INVENTION]

According to one or more embodiments of the present invention, it is possible to provide a torque sensor that can accurately detect a torque.

### BRIEF DESCRIPTION OF THE DRAWINGS

Fig. 1 is a plan view illustrating an example of a torque sensor.
Fig. 2 is an A-A line cross sectional view of the torque sensor illustrated in Fig. 1.
Fig. 3 is a drawing illustrating an example of a circuit structure of a torque sensor.

### DETAILED DESCRIPTION OF THE PREFERRED EMBODIMENTS

In the following, one or more embodiments of the present invention will be described while making reference to the drawings. It should be noted that, in descriptions of the specification and the drawings of an embodiment of the present invention, the same reference numeral is given to an element that has substantially the same functional structure, and duplicated descriptions will be omitted.

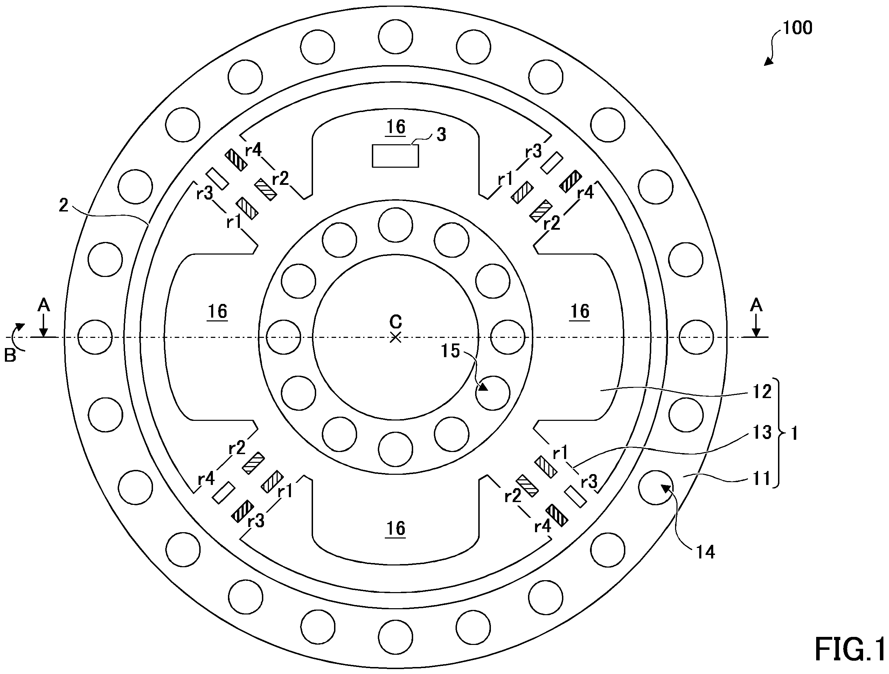

A torque sensor 100 according to an embodiment of the present invention will be described by referring to Figs. 1 to 3. The torque sensor 100 is a disk-shaped sensor that detects a torque. The torque sensor 100 is mounted perpendicular to a rotation axis in a joint part of a robot, etc.

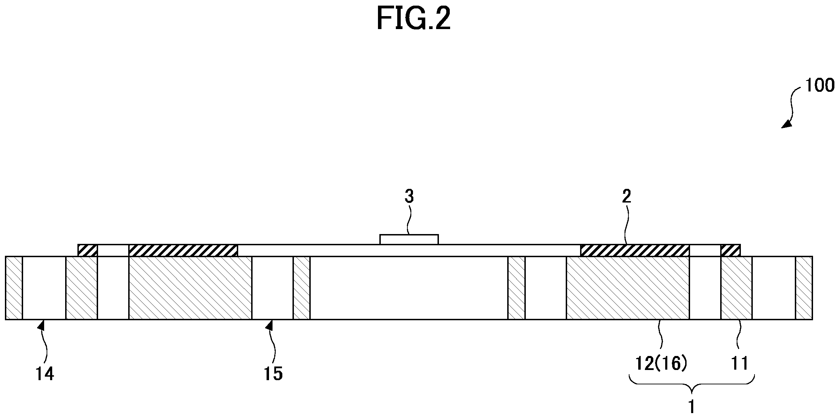

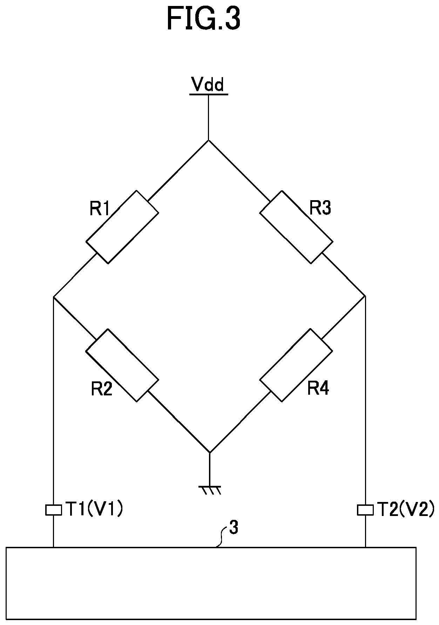

Fig. 1 is a plan view illustrating an example of a torque sensor 100. Fig. 2 is an A-A line cross sectional view of the torque sensor 100 illustrated in Fig. 1. Fig. 3 is a drawing illustrating an example of a circuit structure of the torque sensor 100. In the following, for the sake of convenience, descriptions will be made by assuming up, down, left, and right in the figure as up, down, left, and right of the torque sensor 100, respectively.

The torque sensor 100 includes a strain generation body 1, a insulation layer 2, a first resistor unit R1, a second resistor unit R2, a third resistor unit R3, a fourth resistor unit R4, a first output terminal T1, a first output terminal T2, and a conversion circuit 3.

The strain generation body 1 is a disk-shaped member to which a torque is applied. The torque sensor 100 detects the torque applied to the strain generation body 1 by detecting a strain of the strain generation body 1 using a strain gauge. As illustrated in Fig. 1, the strain generation body 1 includes an outer ring-shaped unit 11, an inner ring-shaped unit 12, and a plurality of spoke units 13.

The outer ring-shaped unit 11 is a ring-shaped part located on the outside of the strain generation body 1. The outer ring-shaped unit 11 includes a plurality of openings 14. The openings 14 is used for fixing the outer ring-shaped unit 11, via a bolt, with a transmission member used for transmission of a drive force from a drive source, or with an operation body to which the drive force is transmitted through the strain generation body 1. In the following, the center of the outer ring-shaped unit 11 is referred to as a center C.

The inner ring-shaped unit 12 is a ring-shaped part located on the inside of the strain generation body 1. The inner ring-shaped unit 12 shares the center C with the outer ring-shaped unit 11 and has an outer diameter that is less than an inner diameter of the outer ring-shaped unit 11. The inner ring-shaped unit 12 includes a plurality of openings 15. The openings 14 is used for fixing the inner ring-shaped unit 12, via a bolt, with a transmission member used for transmission of a drive force from a drive source, or with an operation body to which the drive force is transmitted through the strain generation body 1. The outer ring-shaped unit 11 is fixed with the operation body in the case where the inner ring-shaped unit 12 is fixed with the transmission member, and the outer ring-shaped unit 11 is fixed with the transmission member in the case where the inner ring-shaped unit 12 is fixed with the operation body. Further, the inner ring-shaped unit 12 includes an extension unit 16.

The extension unit 16 is a part that extends from the inner ring-shaped unit 12 towards the outer ring-shaped unit 11. It is possible to easily secure a space for arranging circuit elements including the conversion circuit 3 by providing the extension unit 16. It should be noted that the inner ring-shaped unit 12 includes four extension units 16 that are arranged at the same interval in an example illustrated in Fig. 1. The arrangement and the number of the extension units 16 may be freely designed. Alternatively, the extension units 16 may be provided by extending from the outer ring-shaped unit 11 towards the inner ring-shaped unit 12.

The spoke units 13 are parts that connect the outer ring-shaped unit 11 with the inner ring-shaped unit 12, and a plurality of the spoke units are provided for maintaining the strength of the strain generation body 1. The spoke units 13 are parts with which a torque is transmitted between the outer ring-shaped unit 11 and the inner ring-shaped unit 12, and thus, the parts have a relatively greater strain with respect to the torque in the strain generation body 1. It should be noted that the body 1 includes four spoke units 13 that are arranged at the same interval (per 90 degrees) in an example illustrated in Fig. 1. The number and the arrange of the spoke units 13 are not limited to the above. However, it is preferable that the plurality of the spoke units 13 are arranged at a same interval as illustrated in an example in Fig. 1. According to the above, as described below, it is possible to arrange strain gauges at positions of point symmetry having the center C as a symmetry center.

The insulation layer 2 is an insulation layer provided on the strain generation body 1, and is arranged to cover at least the plurality of spoke units 13. The insulation layer 2 may be an oxide film, a nitride film, or a resin insulation film formed on the strain generation body 1, or may be an insulating printed circuit board fixed onto the strain generation body 1. The printed circuit board may be a flexible circuit board or a rigid circuit board. In either case, the entire surface of the insulation layer 2 is fixed to the strain generation body 1 to get strain in accordance with the strain of the strain generation body 1. Further, the strain generation body 1 may be formed by a printed circuit board. In this case, the strain generation body 1 serves a role of the insulation layer 2. It should be noted that it is preferable that the insulation layer 2 is arranged to cover at least a part of the outer ring-shaped unit 11 and at least a part of the inner ring-shaped unit 12 as illustrated in an example of Fig. 1. According to the above, an area of the insulation layer 2 increases, and thus, it is possible to increase the freedom of circuit design.

Here, a circuit structure formed on the insulation layer 2 will be described by referring to Fig. 3. Fig. 3 is a drawing illustrating an example of a circuit structure of the torque sensor 100. As illustrated in Fig. 3, on the insulation layer 2, a first resistor unit R1, a second resistor unit R2, a third resistor unit R3, a fourth resistor unit R4, a first output terminal T1, a first output terminal T2, and a conversion circuit 3 are provided.

One end of the first resistor unit R1 is connected to a power supply, and the other end of the first resistor unit R1 is connected to the first output terminal T1. One end of the second resistor unit R1 is connected to the first output terminal T1, and the other end of the second resistor unit R2 is connected to the ground. In other words, the first resistor unit R1 and the second resistor unit R2 are connected in series, and form a half bridge circuit. A voltage between the first resistor unit R1 and the second resistor unit R2 (a voltage obtained by dividing a power supply voltage Vdd by the first resistor unit R1 and the second resistor unit R2) is output from the first output terminal T1 as an output voltage V1. The first output terminal T1 is connected to the conversion circuit 3, and the output voltage V1 is input to the conversion circuit 3.

One end of the third resistor unit R3 is connected to the power supply, and the other end of the third resistor unit R3 is connected to the second output terminal T2. One end of the fourth resistor unit R4 is connected to the second output terminal T2, and the other end of the fourth resistor unit R4 is connected to the ground. In other words, the third resistor unit R3 and the fourth resistor unit R4 are connected in series, and form a half bridge circuit. A voltage between the third resistor unit R3 and the fourth resistor unit R4 (a voltage obtained by dividing the power supply voltage Vdd by the third resistor unit R3 and the fourth resistor unit R4) is output from a third output terminal T3 as an output voltage V2. The second output terminal T2 is connected to the conversion circuit 3, and the output voltage V2 is input to the conversion circuit 3.

As is understood from Fig. 3, the third resistor unit R3 and the fourth resistor unit R4 are connected in parallel with the first resistor unit R1 and the second resistor unit R2, and form a bridge circuit together with the first resistor unit R1 and the second resistor unit R2. Each of the first resistor unit R1, the second resistor unit R2, the third resistor unit R3, and the fourth resistor unit R4 includes a plurality of strain gauges. A resistor value of each of the first resistor unit R1, the second resistor unit R2, the third resistor unit R3, and the fourth resistor unit R4 is changed in accordance with a torque applied to the strain generation body. Therefore, the output voltage V1 is a voltage in accordance with resistor values of the first resistor unit R1 and the second resistor unit R2 that are changed in accordance with the torque. Similarly, the output voltage V2 is a voltage in accordance with resistor values of the third resistor unit R3 and the fourth resistor unit R4 that are changed in accordance with the torque. In other words, each of the output voltages V1 and V2 is a voltage in accordance with the torque.

The conversion circuit 3 is a circuit that detects a torque based on the output voltages V1 and V2. Specifically, the conversion circuit 3 converts a difference between the output voltages V1 and V2 into a torque by referring to a table prepared in advance. A case is assumed in an example of Fig. 3 in which the conversion circuit 3 is a single IC (Integrated Circuit). However, the conversion circuit 3 may be formed by a plurality of discrete parts. Further, in an example illustrated in Fig. 1, the inner ring-shaped unit 12 includes the extension units 16, and thus, the conversion circuit 3 can be easily arranged in the inner ring-shaped unit 12.

Next, structures of the first resistor unit R1, the second resistor unit R2, the third resistor unit R3, and the fourth resistor unit R4 will be described by referring to Fig. 1.

The first resistor unit R1 includes four first strain gauges r1 that are connected in series by using printed wiring (not shown in the figure). The first strain gauges r1 may be formed by printing a metal material on the insulation layer 2, or may be formed by attaching a metal foil on the insulation layer 2. Further, the first strain gauges r1 may be independent elements implemented in the insulation layer 2. In either case, the entire surface of the first strain gauges r1 is fixed to the strain generation body 1 to get strain in accordance with the strain of the insulation layer 2. According to the above structure, when load is applied to the strain generation body 1, the strain generation body 1 gets strain in accordance with the load, the insulation layer 2 gets strain together with the strain generation body 1, the first strain gauges r1 get strain together with the insulation layer 2, a resistor value of each of the first strain gauges r1 is changed in accordance with the strain, and a resistor value of the first resistor unit R1 is changed in accordance with the change of the resistor value of each of the first strain gauges r1. As a result, the output voltage V1 is changed in accordance with the load.

The plurality of the first strain gauges r1 are arranged in each of the plurality of the spoke units 13. In an example of Fig. 1, a single first strain gauge r1 is arranged in each of the spoke units 13. However, a plurality of first strain gauges r1 may be arranged in each of the spoke units 13. As described above, the spoke units 13 are parts having a relatively greater strain with respect to the torque in the strain generation body 1, and thus, by arranging the first strain gauges r1 in the spoke units 13, it is possible to cause the output voltage V1 to be relatively greatly changed with respect to the torque, and it is possible to accurately detect the torque.

Further, by arranging the first strain gauges r1 in each of the spoke units 13, it is possible to accurately detect the torque even in a case where the load is applied from a direction different from the rotational direction of the strain generation body 1. For example, in a case where a load is applied to the strain generation body 1 in a direction indicated by an arrow B in Fig. 1 (a direction different from the rotational direction), the first strain gauges r1 arranged in the spoke units 13 on the upper side of the strain generation body 1 are extended and the resistor value of the first strain gauges r1 increases, and the first strain gauges r1 arranged in the spoke units 13 on the lower side of the strain generation body 1 are contracted and the resistor value of the first strain gauges r1 decreases. In other words, changes of the resistor values of the first strain gauges r1 caused by the load in a direction indicated by an arrow B are canceled by each other. As a result, an effect to the resistor value of the first resistor unit R1 due to a load in a direction indicated by an arrow B is decreased and an output voltage V1 is output in accordance with the torque in the rotational direction, and thus, it is possible to accurately detect the torque based on the output voltage V1.

Further, it is preferable that the plurality of the first strain gauges r1 are arranged at a same interval. In an example of Fig. 1, four first strain gauges r1 are arranged at every 90 degrees. According to the above, changes of the resistor values of the first strain gauges r1 are uniformly canceled by each other regardless of the applied direction of the load. In order to realize this kind of arrangement of the first strain gauges r1, it is preferable that the spoke units 13 are arranged at a same interval.

Further, it is preferable that the plurality of the first strain gauges r1 are arranged on the same circumference centered on the center C. According to the above, it is possible to cause the effects to the plurality of the first strain gauges r1 due to a load from a direction different from the rotational direction to be uniform, and it is possible to increase the cancellation accuracy.

Further, it is preferable that the plurality of the first strain gauges r1 are arranged at positions of point symmetry having the center C as a symmetry center. In an example of Fig. 1, a first strain gauge r1 in upper left is arranged at a position of point symmetry with a first strain gauge r1 in lower right, and a first strain gauge r1 in upper right is arranged at a position of point symmetry with a first strain gauge r1 in lower left. According to the above, it is possible to cause the effects, to a set of the first strain gauges r1 that are arranged at positions of point symmetry, due to a load from a direction different from the rotational direction to be uniform, and it is possible to increase the cancellation accuracy. In order to realize this kind of arrangement of the first strain gauges r1, it is preferable that the spoke units 13 are arranged at positions of point symmetry having the center C as a symmetry center.

It should be noted that the number of the first strain gauges r1 included in the first resistor unit R1 is not limited to four as long as a plurality of the first strain gauges r1 are included. However, it is preferable that an even number of the first strain gauges r1 are included in the first resistor unit R1 in order to arrange the first strain gauges r1 point-symmetrically.

The second resistor unit R2 includes four second strain gauges r2 that are connected in series by using printed wiring (not shown in the figure). The second strain gauges r2 may be formed by printing a metal material on the insulation layer 2, or may be formed by attaching a metal foil on the insulation layer 2. Further, the second strain gauges r2 may be independent elements implemented in the insulation layer 2. In either case, the entire surface of the second strain gauges r2 is fixed to the strain generation body 1 to get strain in accordance with the strain of the insulation layer 2. According to the above structure, when load is applied to the strain generation body 1, the strain generation body 1 gets strain in accordance with the load, the insulation layer 2 gets strain together with the strain generation body 1, the second strain gauges r2 get strain together with the insulation layer 2, a resistor value of each of the second strain gauges r2 is changed in accordance with the strain, and a resistor value of the second resistor unit R2 is changed in accordance with the change of the resistor value of each of the second strain gauges r2. As a result, the output voltage V1 is changed in accordance with the load.

The plurality of the second strain gauges r2 are arranged in each of the plurality of the spoke units 13. In an example of Fig. 1, a single second strain gauge r2 is arranged in each of the spoke units 13. However, a plurality of second strain gauges r2 may be arranged in each of the spoke units 13. As described above, the spoke units 13 are parts having a relatively greater strain with respect to the torque in the strain generation body 1, and thus, by arranging the second strain gauges r2 in the spoke units 13, it is possible to cause the output voltage V1 to be relatively greatly changed with respect to the torque, and it is possible to accurately detect the torque.

Further, by arranging the second strain gauges r2 in each of the spoke units 13, it is possible to accurately detect the torque even in a case where the load is applied from a direction different from the rotational direction of the strain generation body 1. For example, in a case where a load is applied to the strain generation body 1 in a direction indicated by an arrow B in Fig. 1 (a direction different from the rotational direction), the second strain gauges r2 arranged in the spoke units 13 on the upper side of the strain generation body 1 are extended and the resistor value of the second strain gauges r2 increases, and the second strain gauges r2 arranged in the spoke units 13 on the lower side of the strain generation body 1 are contracted and the resistor value of the second strain gauges r2 decreases. In other words, changes of the resistor values of the second strain gauges r2 caused by the load in a direction indicated by an arrow B are canceled by each other. As a result, an effect to the resistor value of the second resistor unit R2 due to a load in a direction indicated by an arrow B is decreased and an output voltage V1 is output in accordance with the torque in the rotational direction, and thus, it is possible to accurately detect the torque based on the output voltage V1.

Further, it is preferable that the plurality of the second strain gauges r2 are arranged at a same interval. In an example of Fig. 1, four second strain gauges r2 are arranged at every 90 degrees. According to the above, changes of the resistor values of the second strain gauges r2 are uniformly canceled by each other regardless of the applied direction of the load. In order to realize this kind of arrangement of the second strain gauges r2, it is preferable that the spoke units 13 are arranged at a same interval.

Further, it is preferable that the plurality of the second strain gauges r2 are arranged on the same circumference centered on the center C. According to the above, it is possible to cause the effects to the plurality of the second strain gauges r2 due to a load from a direction different from the rotational direction to be uniform, and it is possible to increase the cancellation accuracy.

Further, it is preferable that the plurality of the second strain gauges r2 are arranged at positions of point symmetry having the center C as a symmetry center. In an example of Fig. 1, a second strain gauge r2 in upper left is arranged at a position of point symmetry with a second strain gauge r2 in lower right, and a second strain gauge r2 in upper right is arranged at a position of point symmetry with a second strain gauge r2 in lower left. According to the above, it is possible to cause the effects to a set of the second strain gauges r2 that are arranged at positions of point symmetry due to a load from a direction different from the rotational direction to be uniform, and it is possible to increase the cancellation accuracy. In order to realize this kind of arrangement of the second strain gauges r2, it is preferable that the spoke units 13 are arranged at positions of point symmetry having the center C as a symmetry center.

Further, a second strain gauge r2 is arranged on one side of a rotational direction viewed from a first strain gauge r1 in each of the spoke units 13. In each of the spoke units 13, a second strain gauge r2 is arranged on one side of a rotational direction, and a first strain gauge r1 is arranged on the other side of the rotational direction. According to the above arrangement, when a torque is applied to the strain generation body 1, the resistor value of the first strain gauge r1 changes in a direction opposite to a direction in which the resistor value of the second strain gauge r2 changes. By forming a half bridge circuit using the above-described first resistor unit R1 and the second resistor unit R2, and by outputting a voltage between the first resistor unit R1 and the second resistor unit R2 as the output voltage V1, it is possible to amplify the change of the output voltage V1 in accordance with a torque.

It should be noted that the number of the second strain gauges r2 included in the second resistor unit R2 is not limited to four as long as a plurality of the second strain gauges r2 are included. However, it is preferable that an even number of the second strain gauges r2 are included in the second resistor unit R2 in order to arrange the second strain gauges r2 point-symmetrically.

The third resistor unit R3 includes four third strain gauges r3 that are connected in series by using printed wiring (not shown in the figure). The third strain gauges r3 may be formed by printing a metal material on the insulation layer 2, or may be formed by attaching a metal foil on the insulation layer 2. Further, the third strain gauges r3 may be independent elements implemented in the insulation layer 2. In either case, the entire surface of the third strain gauges r3 is fixed to the strain generation body 1 to get strain in accordance with the strain of the insulation layer 2. According to the above structure, when load is applied to the strain generation body 1, the strain generation body 1 gets strain in accordance with the load, the insulation layer 2 gets strain together with the strain generation body 1, the third strain gauges r3 get strain together with the insulation layer 2, a resistor value of each of the third strain gauges r3 is changed in accordance with the strain, and a resistor value of the third resistor unit R3 is changed in accordance with the change of the resistor value of each of the third strain gauges r3. As a result, the output voltage V2 is changed in accordance with the load.

The plurality of the third strain gauges r3 are arranged in each of the plurality of the spoke units 13. In an example of Fig. 1, a single third strain gauge r3 is arranged in each of the spoke units 13. However, a plurality of third strain gauges r3 may be arranged in each of the spoke units 13. As described above, the spoke units 13 are parts having a relatively greater strain with respect to the torque in the strain generation body 1, and thus, by arranging the third strain gauges r3 in the spoke units 13, it is possible to cause the output voltage V2 to be relatively greatly changed with respect to the torque, and it is possible to accurately detect the torque.

Further, by arranging the third strain gauges r3 in each of the spoke units 13, it is possible to accurately detect the torque even in a case where the load is applied from a direction different from the rotational direction of the strain generation body 1. For example, in a case where a load is applied to the strain generation body 1 in a direction indicated by an arrow B in Fig. 1 (a direction different from the rotational direction), the third strain gauges r2 arranged in the spoke units 13 on the upper side of the strain generation body 1 are extended and the resistor value of the third strain gauges r3 increases, and the third strain gauges r3 arranged in the spoke units 13 on the lower side of the strain generation body 1 are contracted and the resistor value of the third strain gauges r3 decreases. In other words, changes of the resistor values of the third strain gauges r3 caused by the load in a direction indicated by an arrow B are canceled by each other. As a result, an effect to the resistor value of the third resistor unit R3 due to a load in a direction indicated by an arrow B is decreased and an output voltage V2 is output in accordance with the torque in the rotational direction, and thus, it is possible to accurately detect the torque based on the output voltage V2.

Further, it is preferable that the plurality of the third strain gauges r3 are arranged at a same interval. In an example of Fig. 1, four third strain gauges r3 are arranged at every 90 degrees. According to the above, changes of the resistor values of the third strain gauges r3 are uniformly canceled by each other regardless of the applied direction of the load. In order to realize this kind of arrangement of the third strain gauges r3, it is preferable that the spoke units 13 are arranged at a same interval.

Further, it is preferable that the plurality of the third strain gauges r3 are arranged on the same circumference centered on the center C. According to the above, it is possible to cause the effects to the plurality of the third strain gauges r3 due to a load from a direction different from the rotational direction to be uniform, and it is possible to increase the cancellation accuracy.

Further, it is preferable that the plurality of the third strain gauges r3 are arranged at positions of point symmetry having the center C as a symmetry center. In an example of Fig. 1, a third strain gauge r3 in upper left is arranged at a position of point symmetry with a third strain gauge r3 in lower right, and a third strain gauge r3 in upper right is arranged at a position of point symmetry with a third strain gauge r2 in lower left. According to the above, it is possible to cause the effects to a set of the third strain gauges r3 that are arranged at positions of point symmetry due to a load from a direction different from the rotational direction to be uniform, and it is possible to increase the cancellation accuracy. In order to realize this kind of arrangement of the third strain gauges r3, it is preferable that the spoke units 13 are arranged at positions of point symmetry having the center C as a symmetry center.

It should be noted that the number of the third strain gauges r3 included in the third resistor unit R3 is not limited to four as long as a plurality of the third strain gauges r3 are included. However, it is preferable that an even number of the third strain gauges r3 are included in the third resistor unit R3 in order to arrange the third strain gauges r3 point-symmetrically.

The fourth resistor unit R4 includes four fourth strain gauges r4 that are connected in series by using printed wiring (not shown in the figure). The fourth strain gauges r4 may be formed by printing a metal material on the insulation layer 2, or may be formed by attaching a metal foil on the insulation layer 2. Further, the fourth strain gauges r4 may be independent elements implemented in the insulation layer 2. In either case, the entire surface of the fourth strain gauges r4 is fixed to the strain generation body 1 to get strain in accordance with the strain of the insulation layer 2. According to the above structure, when load is applied to the strain generation body 1, the strain generation body 1 gets strain in accordance with the load, the insulation layer 2 gets strain together with the strain generation body 1, the fourth strain gauges r4 get strain together with the insulation layer 2, a resistor value of each of the fourth strain gauges r4 is changed in accordance with the strain, and a resistor value of the fourth resistor unit R4 is changed in accordance with the change of the resistor value of each of the fourth strain gauges r4. As a result, the output voltage V2 is changed in accordance with the load.

The plurality of the fourth strain gauges r4 are arranged in each of the plurality of the spoke units 13. In an example of Fig. 1, a single fourth strain gauge r4 is arranged in each of the spoke units 13. However, a plurality of fourth strain gauges r4 may be arranged in each of the spoke units 13. As described above, the spoke units 13 are parts having a relatively greater strain with respect to the torque in the strain generation body 1, and thus, by arranging the fourth strain gauges r4 in the spoke units 13, it is possible to cause the output voltage V2 to be relatively greatly changed with respect to the torque, and it is possible to accurately detect the torque.

Further, by arranging the fourth strain gauges r4 in each of the spoke units 13, it is possible to accurately detect the torque even in a case where the load is applied from a direction different from the rotational direction of the strain generation body 1. For example, in a case where a load is applied to the strain generation body 1 in a direction indicated by an arrow B in Fig. 1 (a direction different from the rotational direction), the fourth strain gauges r4 arranged in the spoke units 13 on the upper side of the strain generation body 1 are extended and the resistor value of the fourth strain gauges r4 increases, and the fourth strain gauges r4 arranged in the spoke units 13 on the lower side of the strain generation body 1 are contracted and the resistor value of the fourth strain gauges r4 decreases. In other words, changes of the resistor values of the fourth strain gauges r4 caused by the load in a direction indicated by an arrow B are canceled by each other. As a result, an effect to the resistor value of the fourth resistor unit R4 due to a load in a direction indicated by an arrow B is decreased and an output voltage V2 is output in accordance with the torque in the rotational direction, and thus, it is possible to accurately detect the torque based on the output voltage V2.

Further, it is preferable that the plurality of the fourth strain gauges r4 are arranged at a same interval. In an example of Fig. 1, four fourth strain gauges r4 are arranged at every 90 degrees. According to the above, changes of the resistor values of the fourth strain gauges r4 are uniformly canceled by each other regardless of the applied direction of the load. In order to realize this kind of arrangement of the fourth strain gauges r4, it is preferable that the spoke units 13 are arranged at a same interval.

Further, it is preferable that the plurality of the fourth strain gauges r4 are arranged on the same circumference centered on the center C. According to the above, it is possible to cause the effects to the plurality of the fourth strain gauges r4 due to a load from a direction different from the rotational direction to be uniform, and it is possible to increase the cancellation accuracy.

Further, it is preferable that the plurality of the fourth strain gauges r4 are arranged at positions of point symmetry having the center C as a symmetry center. In an example of Fig. 1, a fourth strain gauge r4 in upper left is arranged at a position of point symmetry with a fourth strain gauge r4 in lower right, and a fourth strain gauge r4 in upper right is arranged at a position of point symmetry with a fourth strain gauge r4 in lower left. According to the above, it is possible to cause the effects to a set of the fourth strain gauges r4 that are arranged at positions of point symmetry due to a load from a direction different from the rotational direction to be uniform, and it is possible to increase the cancellation accuracy. In order to realize this kind of arrangement of the fourth strain gauges r4, it is preferable that the spoke units 13 are arranged at positions of point symmetry having the center C as a symmetry center.

Further, a fourth strain gauge r4 is arranged on one side of a rotational direction viewed from a third strain gauge r3 in each of the spoke units 13. In each of the spoke units 13, a fourth strain gauge r4 is arranged on one side of a rotational direction, and a third strain gauge r3 is arranged on the other side of the rotational direction. According to the above arrangement, when a torque is applied to the strain generation body 1, the resistor value of the third strain gauges r3 changes in a direction opposite to a direction in which the resistor value of the fourth strain gauges r4 changes. By forming a half bridge circuit using the above-described third resistor unit R3 and the fourth resistor unit R4, and by outputting a voltage between the third resistor unit R3 and the fourth resistor unit R4 as the output voltage V2, it is possible to amplify the change of the output voltage V2 in accordance with a torque.

It should be noted that the number of the fourth strain gauges r4 included in the fourth resistor unit R4 is not limited to four as long as a plurality of the fourth strain gauges r4 are included. However, it is preferable that an even number of the fourth strain gauges r4 are included in the fourth resistor unit R4 in order to arrange the fourth strain gauges r4 point-symmetrically.

As described above, according to an embodiment of the present invention, the first strain gauges r1 are arranged in a plurality of spoke units 13, and thus, even in a case where load is applied to the strain generation body 1 from a direction different from a rotational direction, effects of the load are canceled among the plurality of the first strain gauges r1, and an error of the resistor value of the first resistor unit R1 generated by the load is reduced. The above reduction of an error of the resistor value of the first resistor unit R1 applies to the second resistor unit R2, the third resistor unit R3, and the fourth resistor unit R4 in the same way. Therefore, according to an embodiment of the present invention, it is possible to accurately output output voltages V1 and V2 in accordance with a torque, and to accurately detect the torque based on the output voltages V1 and V2 even in a case where load is applied to the strain generation body 1 from a direction different from the rotational direction of the strain generation body 1.

It should be noted that, in an embodiment of the present invention, it is possible that the third resistor unit R3 and the fourth resistor unit R4 are not included. Even in a case where the third resistor unit R3 and the fourth resistor unit R4 are not included, it is possible for the torque sensor 100 to accurately detect a torque based on the output voltage V1.

Further, it is not necessary for the shape of the outer ring-shaped unit 11 and the shape of the inner ring-shaped unit 12 to be a complete ring. A part of the ring may be omitted. In other words, it is only necessary for the outer ring-shaped unit 11 and the inner ring-shaped unit 12 to be connected via the spoke units 13 to form a single strain generation body 1.

Further, the present invention is not limited to embodiments described above, and may be combined with other elements. Various modifications may be possible without departing from the spirit of the present invention.

Further, The present application is based on and claims the benefit of priority of Japanese Priority Application No. 2018-029140 filed on February 21, 2018, the entire contents of which are hereby incorporated herein by reference.

### [DESCRIPTION OF THE REFERENCE NUMERALS]

- 1:: strain generation body
- 2:: insulation layer
- 3:: conversion circuit
- 11:: outer ring-shaped unit
- 12:: inner ring-shaped unit
- 13:: spoke unit
- 14:: opening
- 15:: opening
- 16:: extension unit
- 100:: torque sensor
- R1:: first resistor unit
- R2:: second resistor unit
- R3:: third resistor unit
- R4:: fourth resistor unit
- r1:: first gauge element
- r2:: second gauge element
- r3:: third gauge element
- r4:: fourth gauge element

## Claims

1. A torque sensor comprising:
a strain generation body including an outer ring-shaped unit, an inner ring-shaped unit that shares a center with the outer ring-shaped unit, and a plurality of spoke units that connect the outer ring-shaped unit with the inner ring-shaped unit;
an insulation layer provided on the strain generation body;
a first resistor unit and a second resistor unit that are connected in series and that are provided on the insulation layer; and
a first output terminal that is connected between the first resistor unit and the second resistor unit, wherein
the first resistor unit includes a plurality of first gauge elements that are connected in series and that are provided in each of the plurality of the spoke units, and
the second resistor unit includes a plurality of second gauge elements that are connected in series and that are provided in each of the plurality of the spoke units.

2. The torque sensor according to claim 1, wherein
at least one of
the plurality of the spoke units,
the plurality of the first gauge elements, and
the plurality of the second gauge elements
is arranged at a same interval.

3. The torque sensor according to claim 1 or 2, wherein
at least one of
the plurality of the spoke units,
the plurality of the first gauge elements, and
the plurality of the second gauge elements
is arranged at positions of point symmetry having the center as a symmetry center.

4. The torque sensor according to any one of claims 1 to 3, the torque sensor further comprising:
a third resistor unit and a fourth resistor unit that are connected in series and that are provided on the insulation layer; and
a second output terminal that is connected between the third resistor unit and the fourth resistor unit, wherein
the third resistor unit includes a plurality of third gauge elements that are connected in series and that are provided in each of the plurality of the spoke units, and
the fourth resistor unit includes a plurality of fourth gauge elements that are connected in series and that are provided in each of the plurality of the spoke units.

5. The torque sensor according to claim 4,
wherein
at least one of
the plurality of the spoke units,
the plurality of the third gauge elements, and
the plurality of the fourth gauge elements
is arranged at a same interval.

6. The torque sensor according to claim 4 or 5, wherein
at least one of
the plurality of the spoke units,
the plurality of the first gauge elements, and
the plurality of the second gauge elements
is arranged at positions of point symmetry having the center as a symmetry center.

7. The torque sensor according to any one of claims 1 to 6, wherein
the strain generation body includes an extension unit that extends from the outer ring-shaped unit toward the inner ring-shaped unit, or that extends from the inner ring-shaped unit toward the outer ring-shaped unit.
